(19) Europäisches Patentamt
European Patent Office
Office européen des brevets

(11) **EP 3 510 520 B1**

(12) **EUROPEAN PATENT SPECIFICATION**

(45) Date of publication and mention
of the grant of the patent:
**23.12.2020  Bulletin 2020/52**

(51) Int Cl.:
***G06K 7/10*** *(2006.01)*      ***G01B 7/00*** *(2006.01)*

(21) Application number: **17730579.4**

(22) Date of filing: **31.05.2017**

(86) International application number:
**PCT/IB2017/053191**

(87) International publication number:
**WO 2018/047022 (15.03.2018 Gazette 2018/11)**

(54) **ELECTRONIC READER**

ELEKTRONISCHES LESEGERÄT

LECTEUR ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.09.2016  AU 2016903636**

(43) Date of publication of application:
**17.07.2019  Bulletin 2019/29**

(73) Proprietor: **Sato Holdings Kabushiki Kaisha
Tokyo 153-0064 (JP)**

(72) Inventors:
• **LITTLECHILD, Stuart
St Peters
New South Wales 2044 (AU)**
• **PONG, Tai Wai
St Peters
New South Wales 2044 (AU)**
• **GRAY, Jeff
St Peters
New South Wales 2044 (AU)**
• **MURDOCH, Graham
St Peters
New South Wales 2044 (AU)**

(74) Representative: **Grünecker Patent- und
Rechtsanwälte
PartG mbB
Leopoldstraße 4
80802 München (DE)**

(56) References cited:
**WO-A1-2007/030861      US-A1- 2006 165 039
US-A1- 2014 291 399      US-A1- 2016 078 263**

## Description

### Technical Field

The present disclosure relates, generally, to reading electronic tags and, more particularly, to a system for, and a method of, determining a location of a selected electronic tag amongst other tags.

### Background

Electronic tags, such as radio-frequency identification (RFID) tags are used to label and track items, for example for inventory tracking. Passive RFID tags use the radio energy transmitted by an electronic RFID reader to provide the data stored on the tags. Some readers use Near-Field for communication over a relatively small distance, typically less than 50cm. Near-Field readers have a coil antenna that produces a magnetic field which, when brought close enough to an RFID tag, will result in coupling with the tag's antenna depending on the tag's orientation relative to the magnetic field. Typically, readers are able to couple with and read many tags at once, so that a group of tags can be identified by a single reading.

When a conventional reader is used and multiple tags are read at the same time, it is typically not possible to pinpoint the location of a particular tag amongst the other tags, especially if all the tags are in one container, or in the same compartment of a holder. This is particularly inconvenient when a large group of tags are held in one container and all read by a reader at the same time.

WO 2007/030861 describes an RFID interrogator antenna for interrogating a group of RFID transponders, for example a collection of gaming tokens. The antenna includes two different coils that are used sequentially in order to facilitate three dimensional interrogation on a flat surface by producing normal and tangential magnetic fields.

US 2014/291399 describes an RFID reader in the form of a storage device that holds tokens in a row of storage slots so that they are oriented in a specific direction with respect to the antennas. Having multiple antennas allows a strong enough magnetic field along the length of the storage device for reading the RFIDs of the tokens stacked in the storage device.

US 2016/078263 describes a system consisting of a mobile cabinet with shelves that hold RFID tags, and a docking station that has an RFID reader and antenna. When the cabinet is docked, the antennas of the docking station are positioned below or within the shelves of the cabinet in order to read the tags present on the shelves.

US 2006/165039 describes a reader device with reader boards in communication with multiple antenna circuits via a switch. The antennas are used to locate and track spaced apart RFID tags by having an antenna in a relative static position per location where one or more tags can be present in the location associated with each antenna. For larger area locations, the exact position of a tag is not discernible.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Summary

In one aspect there is provided a method of determining, with a Near-Field electronic reader comprising at least two antennas, a location of a selected electronic tag amongst an array of closely stacked tags, the method comprising: generating at least two magnetic fields using the at least two antennas, the at least two magnetic fields causing intersecting lines of magnetic flux relative to the array of closely stacked tags, the intersecting lines of magnetic flux defining at least one detection zone; sequentially switching each antenna to receive sequential antenna signals indicative of tags within each magnetic field, the antenna signals including detection zone readings; responsive to at least two successive sequential switching operations, obtaining a difference in two successive detection zone readings; and generating an output signal indicative of the location of the selected electronic tag relative to the at least one detection zone.

The generating may be based on the difference. The difference in the successive detection zone readings may be caused by a relative movement between the selected electronic tag and the at least one detection zone. The generating may comprise generating the at least two magnetic fields so that the magnetic fields are oriented to couple with the tags in the array of closely stacked tags.

Each received antenna signal may be indicative of a set of electronic tags read by that antenna; the detection zone readings may be determined from an overlap of two sets of readings; and the method may comprise determining the difference from a change in the detection zone readings associated with receipt of antenna signals resulting from two successive switching operations.

The output signal may activate a direction annunciator that indicates a relative direction of the selected electronic tag in relation to the at least one detection zone. The output signal may be indicative of the location with respect to an area across a width of the electronic reader. In addition, or instead, the output signal may be indicative of the location with respect to an area along a length of the electronic reader.

The method may further comprise resizing the at least one detection zone.

In another aspect there is provided a Near-Field electronic reader for determining a location of a selected electronic tag amongst an array of closely stacked tags, the electronic reader comprising: at least two independently operable antennas configured to be operated sequentially to interrogate electronic tags and output sequential antenna signals including detection zone readings, each antenna comprising at least one conducting portion which generates a magnetic field, the conducting portions being spaced from each other such that the generated magnetic fields cause lines of magnetic flux that intersect to define at least one detection zone; and a processor responsive to at least two successive sequential switching operations of the at least two antennas to obtain a difference in two successive detection zone readings, wherein the processor uses the difference to generate an output signal indicative of the location of the selected electronic tag relative to the at least one detection zone.

The two detection zone readings may differ due to a relative movement between the selected electronic tag and the at least one detection zone.

The magnetic field of each conducting portion may cause a coupling with a tag antenna of the selected tag when the tag antenna is within a coupling distance to the respective conductive portion, said coupling having a coupling strength indicative of a distance between the tag antenna and the conducting portion.

The magnetic fields may be oriented to couple with tags in the array of closely stacked tags.

Tags in the array of closely stacked tags may have a fixed relative position in relation to the selected electronic tag.

The Near-Field electronic reader may further comprise an annunciator responsive to the output signal and configured to indicate a relative direction of movement to locate the selected electronic tag in the detection zone.

The at least two independently operable antennas may comprise a two dimensional array of antennas that define a plurality of detection zones arranged across at least one of a width and a length of a surface of the electronic reader.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

**Brief Description of Drawings**

Embodiments of the disclosure are now described by way of example with reference to the accompanying drawings in which:-

Figure 1A is a schematic, perspective view of a container of tags placed on an embodiment of a Near-Field electronic reader;

Figure 1B is a schematic representation of the operation of the Near-Field electronic reader;

Figure 2A is a schematic representation of an antenna's magnetic field and magnetic flux in relation to an array of electronic tags;

Figure 2B is a schematic representation of the magnetic field and magnetic flux provided by a coil antenna;

Figure 3A is a schematic representation of an embodiment of a two-coil Near-Field electronic reader;

Figure 3B is a schematic representation of another embodiment of a two-coil Near-Field electronic reader;

Figure 4A is a schematic, perspective view of a container of tags placed on an embodiment of a Near-Field electronic reader;

Figure 4B is a perspective view of the electronic reader of Figure 4A, with the container of tags moved along a surface of the reader;

Figure 5A is a schematic representation of an embodiment of a four-coil Near-Field electronic reader;

Figure 5B is a plan view of the four-coil electronic reader of Figure 5A;

Figure 6 is a flow diagram showing an embodiment of a method of determining a location of a selected electronic tag;

Figure 7 is a flow diagram showing another embodiment of a method of determining a location of a selected electronic tag;

Figure 8A is a schematic, perspective view of a container of tags placed on another embodiment of an electronic reader;

Figure 8B is a perspective view of a first, lateral antenna array forming part of the electronic reader of Figure 8A;

Figure 8C is a perspective view of a second, longitudinal antenna array forming part of the electronic reader of Figure 8A;

Figure 8D is an exploded, perspective view illustrating the combined antenna arrays of the electronic reader of Figure 8A; and

Figure 9 is a schematic representation of the magnetic fields and magnetic flux with respect to a tag oriented diagonally above the electronic reader of Figures 8A-D.

In the drawings, like reference numerals designate similar parts.

## Description of Embodiments

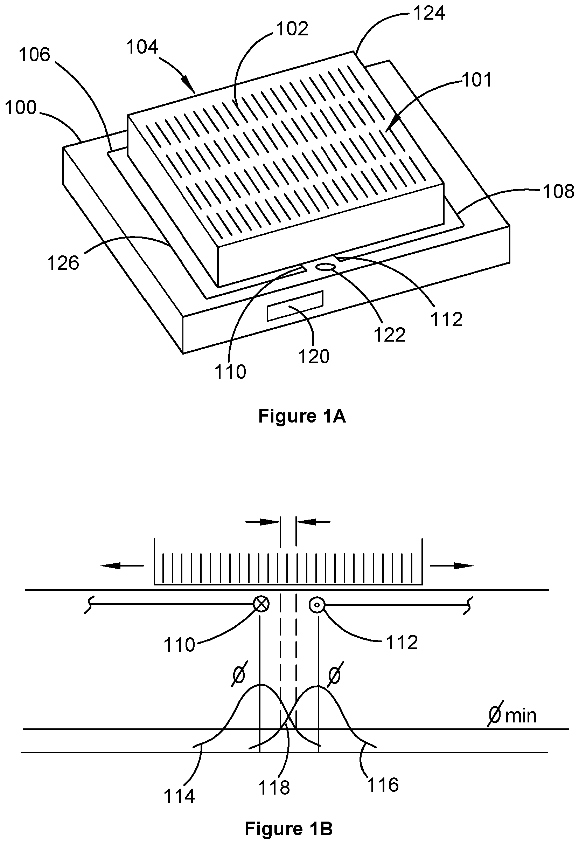

Figure 1A of the drawings shows a Near-Field electronic reader 100 for determining a location of a selected electronic tag 102 amongst an array 104 of closely stacked tags 101. The electronic reader 100 has at least two independently operable antennas 106, 108 configured to be operated sequentially to interrogate electronic tags and output sequential antenna signals including detection zone readings. Each antenna 106, 108 includes at least one conducting portion 110, 112 which generates a magnetic field, H. Magnetic flux, $\Phi$, is the number of magnetic field lines passing through a surface placed in the magnetic field, H , in other words the surface integral of the normal component of the magnetic field passing through a surface. For this reason, in the embodiments described herein, the tags are stacked vertically to maximise the magnetic flux with respect to the tag antennas. The tags may also lie at an angle, but the method described herein may not be as effective for tags lying horizontally on the surface of the reader.

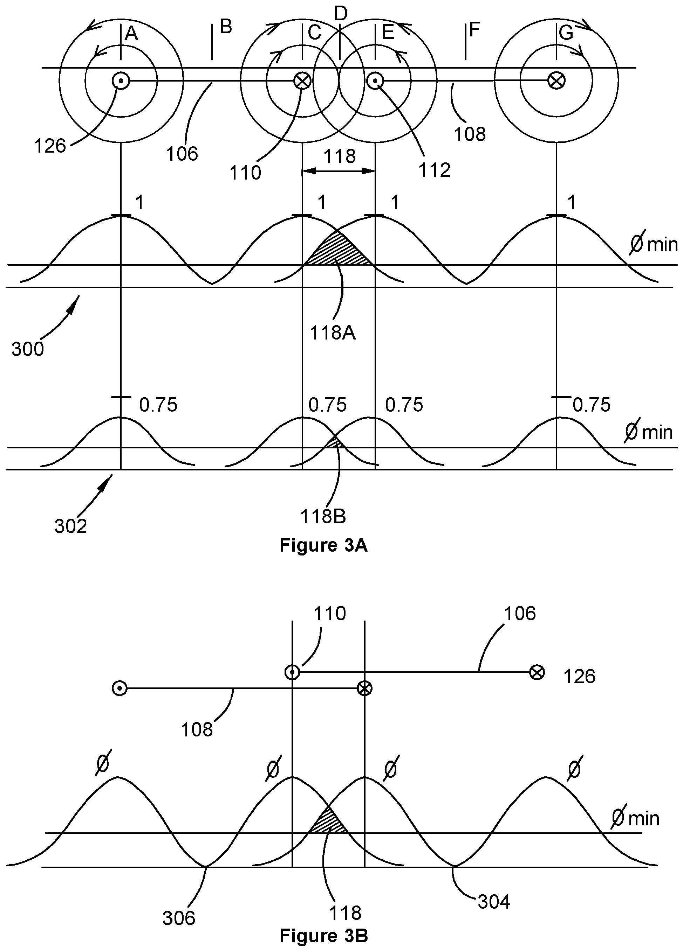

The magnetic flux 114, 116 for the tags in the array 104 resulting from each of the conducting portions 110, 112 respectively, is shown schematically in Figure 1B. The conducting portions 110, 112 are spaced from each other such that the generated magnetic fields cause lines of magnetic flux 114, 116 that intersect to define at least one detection zone 118. The magnetic flux 114, 116 is shown here as being substantially symmetrical on either side the conducting portions 110, 112. It should be understood that this is not necessarily the case, and that the magnetic flux may in fact be asymmetrical on either side of a conductor, for example with respect to the inside or outside of a coil as described elsewhere herein with respect to Figure 3B.

The electronic reader 100 has a processor 120 that is responsive to at least two successive sequential switching operations of the at least two antennas 106, 108 to obtain a difference in two successive detection zone readings. The processor 120 uses the difference to generate an output signal indicative of the location of the selected electronic tag 102 relative to the at least one detection zone 118.

The electronic reader 100 has one or more annunciators 122 responsive to the output signal, for example an illuminated arrow, that indicates an approximate location of the selected electronic tag 102. In some embodiments the approximate location is in relation to the detection zone 118.

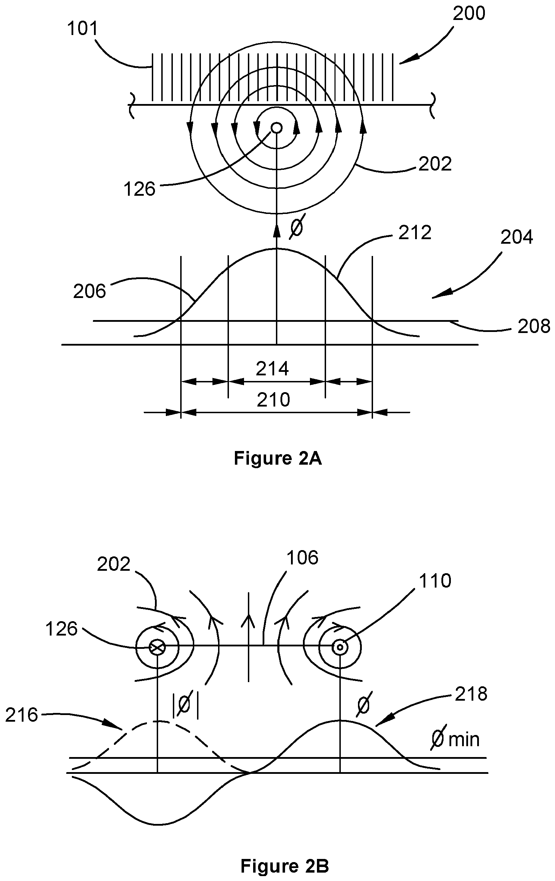

Operation of the antennas 106, 108 with respect to the array 102 of tags may be better understood with reference to Figure 2A and Figure 2B of the drawings. For a quadrilateral antenna (for example approximately in the shape of a square or a rectangle), two of the four sides will lie parallel to vertically closely stacked tags 101 arranged in rows in a container 124 as depicted in Figure 1A of the drawings.

Referring first only to one antenna coil, the antenna 106 is in the shape of a rectangle with a first conducting portion 110 towards the middle of the reader 100, and a parallel second conducting portion 126, as shown towards the left of the reader 100 in Figure 1A as well as in Figure 2B. These first and second conducting portions 110, 126 will result in a magnetic field 202, H, that causes a coupling with tag antennas in the array 104 of tags because of the relative alignment of the tags and conducting portions 110, 126.

A partial cross-section is illustrated in Figure 2A, showing one row 200 of tags 101, each having a coil antenna lying in a plane normal to the plane of the drawing. Curve 204 shows the magnetic flux 206 through the surface of the tags in proximity to the conducting portion 126 and approximates a bell curve. A flux minimum threshold 208 is the threshold below which the reader antenna 106 will not couple with a tag antenna, so that the range of operation 210 is a limited distance to either side of the conducting portion 126. The outer part 212 of the range of operation 210 has a high rate of change, while the central part 214 includes the maximum flux, and varies slowly. As can be seen in Figure 2B of the drawings, the coil antenna 106 includes two conducting portions 110, 126, each generating a magnetic field that can couple with tags positioned within a Near-Field range, and therefore effectively provides two reading areas 216, 218 where the magnetic flux 206 has two corresponding low field change flux ranges.

Referring now to Figure 3A of the drawings, where two antennas 106, 108 are configured adjacent one another as in the reader 100 of Figure 1A, each of these quadrilateral antennas 106, 108 has two conducting portions generating magnetic flux that can couple with tags in the container 124 on the reader 100. Example tags are labelled A to G from left to right. For the two innermost conducting portions 110 and 112 the overlap of magnetic fields cause lines of magnetic flux that intersect to define a detection zone 118.

Referring to the first, full strength magnetic flux curve 300, illustrated as having a unit value of "1", results in the full strength detection zone 118A which lies in a space between the two adjacent conducting portions 110, 112. Each antenna 106, 108 is switched sequentially, so that an antenna signal from the first antenna 106 is received by the processor 120 first, followed by an antenna signal from the second antenna 108. Each antenna signal is indicative of tags detected within each magnetic field as shown in Table 1 below:

**Table 1: Maximum tags detected by antennas 106, 108**

|  | A | B | C | D | E | F | G |
|---|---|---|---|---|---|---|---|
| Antenna 106 | ✓ | × | ✓ | ✓ | ✓ | × | × |
| Antenna 108 | × | × | ✓ | ✓ | ✓ | × | ✓ |

From the results received, the processor 120 is able to determine that tags C, D and E lie within the detection zone 118A.

In one embodiment, the reader 100 receives a user input selecting a tag to be located. If, in the example of Table 1 and Figure 3A, the selected tag is C (for example), then from the results as shown in Table 1, the processor 120 is able to determine that tag C is located within the detection zone 118A. Accordingly, the processor 120 is then able to generate an output signal indicative of the location of the selected tag C, for example by outputting a location indicator to a user interface, such as a screen, or annunciator 122 (which may be a light or LED aligned on the surface of the reader 100 proximate the location of the detection zone 118A).

The granularity, or precision, of the output provided may, however, be limited if a large number of tags is present within a relatively large detection zone, for example zone 118A. In order to more accurately pinpoint the location of the selected tag 102, the size of the detection zone may be altered by changing the strength of the magnetic field. This may be achieved by reducing the current to the antennas 106, 108, thereby resulting in a smaller detection zone 118B as shown in the second, reduced strength magnetic flux curve 302 where the magnetic field strength is shown as 0.75 of the field strength of magnetic flux curve 300.

The results of the subsequent sequential switching at a lower power and corresponding smaller detection zone 118B, are shown in Table 2 below:

**Table 2: Tags detected by antennas 106, 108 at reduced power**

|  | A | B | C | D | E | F | G |
|---|---|---|---|---|---|---|---|
| Antenna 106 | ✓ | × | ✓ | ✓ | × | × | × |
| Antenna 108 | × | × | × | ✓ | ✓ | × | ✓ |

In this example, the processor 120 is able to determine that tag D lies in the smaller detection zone 118B, and that selected tag C lies more towards antenna 106 because tag C was read by antenna 106 but not antenna 108. Consequently, processor 120 is able to generate an output signal indicating that the selected tag lies outside of the detection zone 118B and in the direction of antenna 106. The output signal may then activate a direction annunciator that indicates a relative direction of the selected tag in relation to the detection zone 118B, for example a message on a user interface, or an illuminated arrow, etc.

Figure 3B illustrates an alternate embodiment where the coils 106 and 108 are overlapped with the innermost adjacent conductors 110 and 112 swapping their relative positions compared to Figure 3A to form an area of overlap. The detection zone 118 is co-located with the area of overlap.

Both coil arrangements of Figure 3A and Figure 3B produce a detection zone 118 that can be used to locate a specific tag or tags from amongst many closely stacked tagged items. The rate of change in magnetic flux, $\Phi$, within each coil is higher because the magnetic flux must go to zero at the centres 304, 306 of the respective coils 106, 108 where the tangential field changes direction as shown for the two reading areas 216, 218 in Figure 2B. In contrast, the rate of change in magnetic flux on the outside of the coils tends to be lower as there is no change in direction of the flux. Consequently, this higher rate of change of the magnetic flux within the coils may lend itself to a better and more accurate localisation of the tagged item being searched where the overlapped coil arrangement shown in Figure 3B is used.

Where the electronic reader 100 described herein is described with reference to the non-overlapping coil arrangement illustrated in Figure 3A, it should be understood that an overlapping coil arrangement such as the one illustrated in Figure 3B may be used additionally or alternatively.

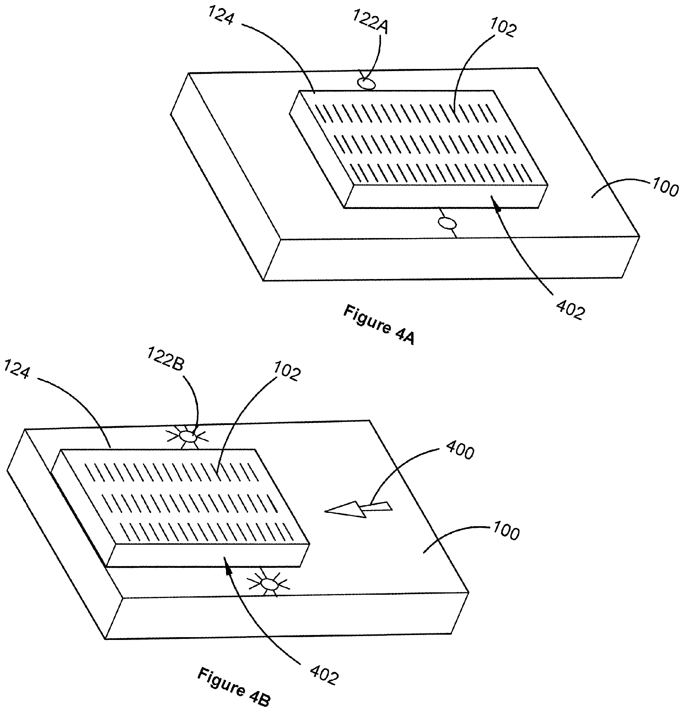

In the above examples, in the event that the selected tag is tag B, then the reader 100 will not be able to provide any information regarding the location of tag B. In order to locate a selected tag that has not been picked up by the antennas 106, 108 yet, a change in detection zone readings may be effected for a subsequent switching of the antennas 106, 108. This change may be effected by a relative movement between the selected tag and the detection zone, as illustrated in Figures 4A and 4B where the container 124 holding the array 102 of tags is moved along the surface of the reader 100 in the direction of arrow 400.

In Figure 4A the selected tag 102 is not detected by either of the antennas 106, 108 (not shown in this illustration). The reader 100 repeatedly performs sequential switching operations, while the processor 120 analyses the antenna signals, looking for the selected tag 102. While the reader 100 performs these repeated switching operations, a user moves the container 124 across the surface of the reader 100, and when the container 124 is in the right position, the processor 120 will determine that the selected tag 102 lies within the detection zone 118. This will then result in an output signal that activates the annunciator 112. In Figure 4A, while the selected tag 102 lies outside of the detection zone 118, the inactive annunciator 122A provides no output or a negative output. In Figure 4B, when the processor 120 determines that the selected tag 102 lies within the detection zone, the active annunciator 122B provides a positive output, thereby indicating the approximate location of the selected tag 102, namely coinciding with the detection zone 118.

In some embodiments, the processor 120 receives at least two successive sequential switching operations (for example where the container 124 has been moved, or where the antenna power has been changed to resize the detection zone 118), and the processor 120 is then able to determine a difference between the detection zone readings for the two successive readings. For example, if at first in Figure 4A antenna 106 does not read selected tag 102, but antenna 108 does read selected tag 102, although the tag 102 does not lie in the detection zone 118 the processor 120 is able to deduce the relative location of the selected tag 102 with respect to the detection zone 118 based on the reading of antenna 108. The processor 120 determines the relative direction of the tag 102 with respect to the detection zone 118 and activates the annunciator 122 to provide an indication of the direction in which the container 124 should be moved to position the selected tag 102 within the detection zone 118.

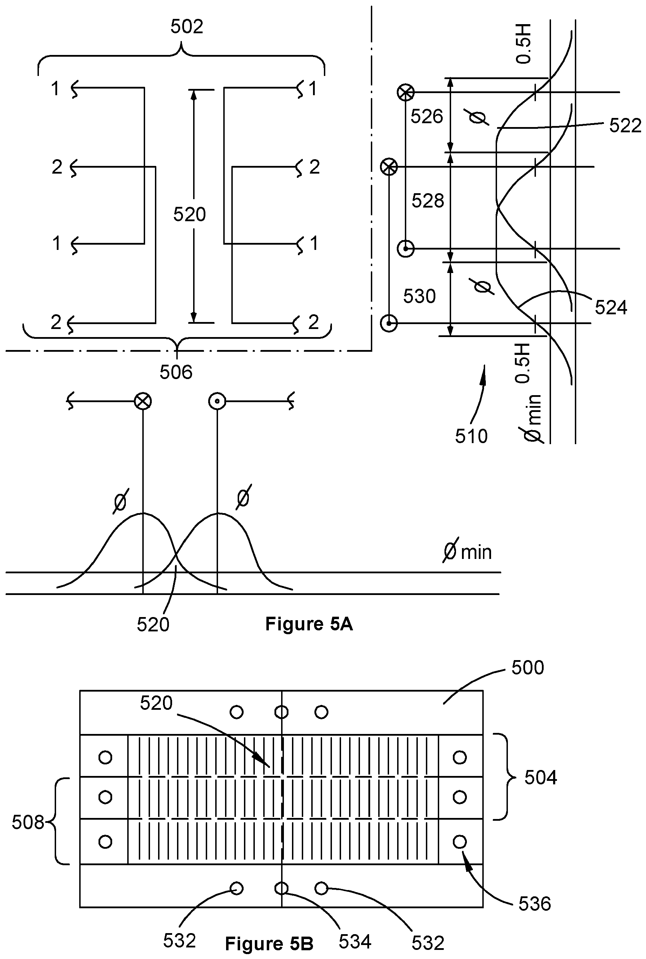

In some embodiments one or more additional pairs of antennas are provided in order to output location indicators with increased resolution. Referring to Figures 5A and 5B of the drawings, in one embodiment a first pair of antennas 502 lies in a first reading area 504 of the reader 500, and a second pair of antennas 506 lies in a second reading area 508 of the reader 500. An extended detection zone 520 is created by the combination of the overlapping individual detection zones of both pairs of antennas 502, 506.

In this embodiment, each antenna of the first pair 502 is operated one at a time, after which each antenna of the second pair 506 is operated one at a time, so that the processor 120 receives one antenna signal at a time from which the processor 120 determines which tags are read by which one of the four antennas, and the processor also determines which tags lie within the extended detection zone 520.

Referring to curve 510, the lines magnetic flux 522, 524 overlap and taper off on either side of each antenna coil, i.e. along the sides of the quadrilateral antennas that will not couple with tags aligned as illustrated in Figure 5B. This results in three distinct detection zones discernible by the processor 120 from the received antenna signals: a first zone 526 that includes mostly the detection zone of the first pair of antennas 502, a second zone 528 defined by the overlap of the detection zones of the first and second pair of antennas 502,506, and a third zone 530 that includes mostly the detection zone of the second pair of antennas 506.

In this embodiment, a two dimensional set of annunciators is provided in order to communicate the increased resolution provided by the two pairs of antennas 502, 506. On either side, along the length of the reader 500, directional annunciators 532 are used to indicate a relative location of the selected electronic tag in relation to the extended detection zone 520 when the tag 102 is not in the detection zone 520. The detection zone annunciators 534 indicate the presence of the selected tag in the extended detection zone 520. The zone annunciators 536 indicate in which of the three zones 526, 528, 530 the selected tag lies when it is read by one or both of the antenna pairs 502, 506. It will be appreciated that the zones 526, 528 and 530 may be configured to correspond, to an extent, to rows of tags 102 in the container 124.

In some embodiments, more than two antenna pairs are used to further increase the resolution. In some embodiments more than one detection zone and/or extended detection zone is provided along the length of the reader. It will be understood by those skilled in the art having the benefit of this disclosure that various antenna configurations can be used to provide multiple discernible zones, including configurations that incorporate an uneven number of antennas, i.e. unpaired antennas.

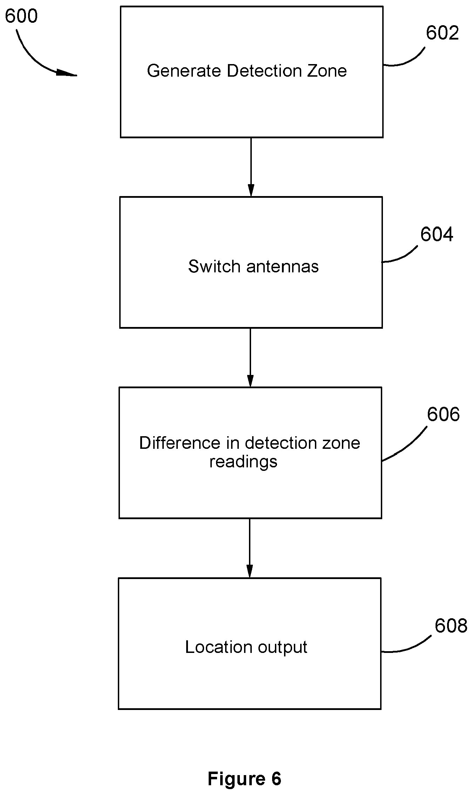

Referring to the method 600 illustrated in the flow diagram of Figure 6 of the drawings, the reader 100 described herein is used to determine the location of a selected electronic tag 102 amongst an array 104 of closely stacked tags by generating a detection zone 118 at step 602. This is done by generating at least two magnetic fields by at least two antennas 106, 108 (or more, for example the four antennas of the two pairs 502, 506 in Figure 5A). The magnetic fields cause intersecting lines of magnetic flux 114, 116 relative to the array 104 of closely stacked tags. The intersecting lines of magnetic flux define the detection zone 118. As described above with reference to Figures 5A and 5B, for example, more than one detection zone or an extended detection zone 520 may be generated.

At 604 each antenna 106, 108 is switched sequentially and the sequential antenna signals are received by the processor 120. The received sequential antenna signals are indicative of tags within each magnetic field, and the antenna signals include detection zone readings,: tags detected by both antennas lying within the detection zone.

At 606 a difference between two successive detection zone readings is obtained in response to at least two successive sequential switching operations. The detection zone readings differ because, from successive antenna signals, different tags are successively located in the detection zone. This may be due to a number of different inputs that cause, for example, a change in antenna power, magnetic field, magnetic flux, relative tag position, detection zone size, number of detection zones, etc.

At 608 an output signal indicative of the location of the selected electronic tag relative to the at least one detection zone 118 is generated. The output signal is used to activate an annunciator provided to a user of the reader 100 regarding the approximate location of a tag selected by the user. As described above with reference to figure 1A and Figure 5B, the output signal may activate one or more annunciators indicating one or more zones in which the selected tag is located, and/or indicating a tag location relative to a location marker (such as an annunciator co-located with a detection zone).

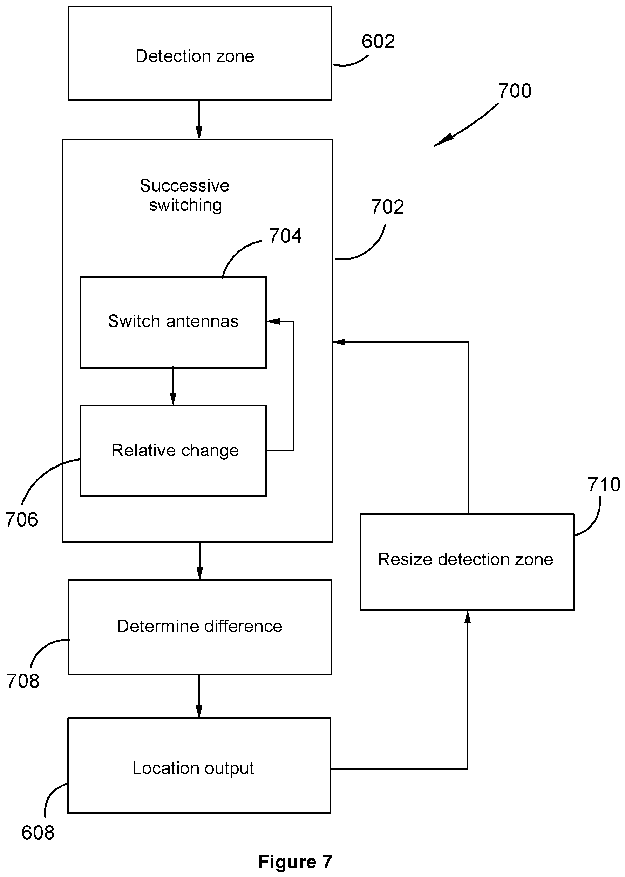

In another embodiment, the method 700 illustrated in the flow diagram of Figure 7 of the drawings, at 602 generates a detection zone 118, and then at 702 effects successive switching of the antennas 106, 108. This is a repeated sequential switching step, wherein each of the antennas (two or more, depending on the configuration of the reader) is switched on one at a time at 704, providing one antenna signal at a time to the processor 120. Once all the antennas have been switched, the reader 100 cycles through them all again and continues this successive switching while the reader 100 is in use.

At 706, a relative change to the detection zone reading(s) is effected. As described above, this may be done by a user moving the tags relative to the detection zone 118. In some embodiments, the reader 100 may include a mechanism for effecting this relative movement, either by moving the antennas, the detection zone, or the container 124 of tags (for example with a moving platform, a conveyer belt, or the like).

At 708 the processor 120 uses the received antenna signals from the successive switching operations to determine any differences in detection zone readings. In some embodiments the differences in detection zone readings are determined intermittently, for example after each sequential switching cycle in which each antenna has been activated once. In other embodiments the processor 120 continually monitors for changes, for example after each antenna signal has been received. In some embodiments steps 706 and 708 may occur simultaneously and continuously.

At 608, similar to the method 600 illustrated in Figure 6 and described above, an output signal indicative of an approximate location of the selected electronic tag 102 relative to the at least one detection zone 118 is generated and used to activate one or more annunciators.

At 710 the detection zone 118 is resized as described above with reference to Figure 3A. In some embodiments, more than one detection zone may be provided and resized at 710. Following the resizing, the antennas are again switched successively at 702, and any differences in detection zone readings determined at 708 so that a location output can be generated at 608.

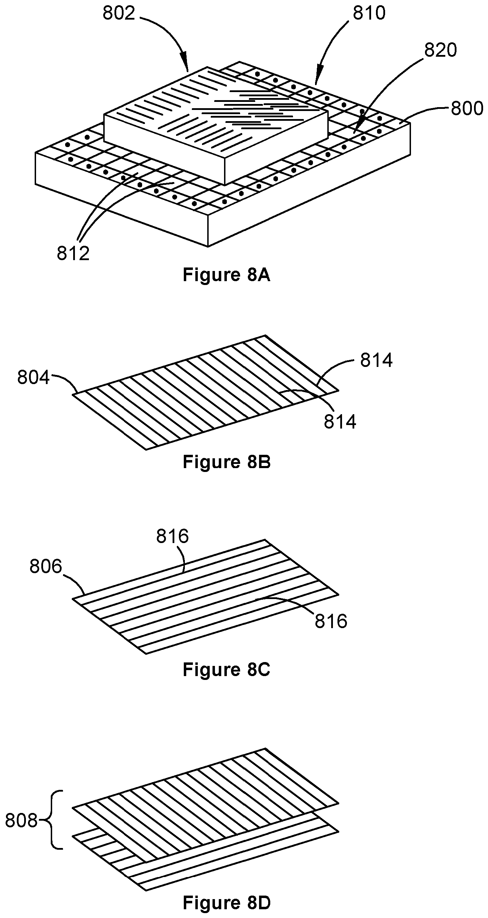

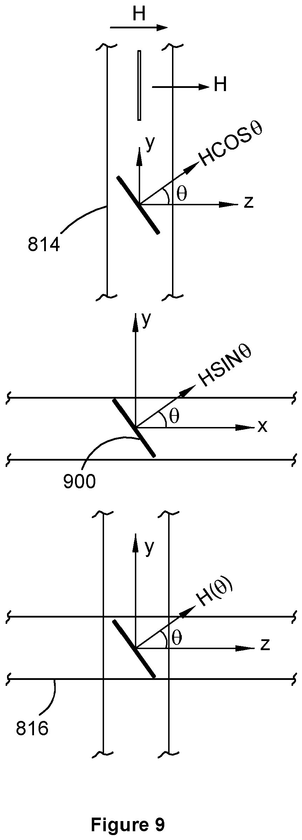

Referring now to Figure 8A of the drawings, a reader 800 is shown that provides a grid 820 of antennas, and consequently has the added advantage of being able to read electronic tags in varying upright, angled orientations 802 because of the density of magnetic flux provided by the grid. This may be understood with reference to Figure 9 in which a tag 900 is diagonally oriented with respect to the antennas in the grid 820. The magnetic field that couples with the tag 900 includes both an x and y component, as described by Equation 1, where θ is the angle at which the tag 900 lies with respect to the lateral array 804 shown in Figure 8B:

$$\frac{H_y}{H_x} = \frac{\sin \theta}{\cos \theta} = \tan \theta$$

$$\theta = \tan^{-1} \frac{H_y}{H_x} \qquad \text{Eq. 1}$$

Because the grid 820 includes many, relatively closely spaced antennas, the resulting magnetic fields in both the x and y directions will result in sufficient magnetic flux to couple with most, if not all, of the tags in varying upright, angled orientations 802.

The reader 800 combines two antenna arrays: a lateral array 804 shown in Figure 8B superimposed on a longitudinal array 806 shown in Figure 8C. The combined antenna array 808 shown in Figure 8D forms a grid of zones 812 within which tags may be detected, as shown by the array of annunciators 810 along the sides of the reader 800 in Figure 8A. In order for the reader 800 to be able to discern in which one of the zones 812 a selected tag lies, each lateral conducting portion 814 is switched individually, followed by each longitudinal conducting portion 816. The resulting matrix of antenna readings is processed to determine the zone 812 in which the selected tag lies, following which an output signal is generated that activates corresponding annunciators in the array 810.

The Near-Field electronic reader described herein is advantageously able to provide a user with a relatively fast indication of the location of a selected tag amongst an array of closely stacked tags. Depending on the specific antenna configuration used, the reader is able to provide the user an indication of a range of rows and/or columns within which the reader's selected tag lies. This can substantially reduce the number of items that a user needs to inspect in order to find the required item associated with the selected electronic tag. In closely stacked arrays consisting of dozens or even hundreds of items, this can translate into a substantial time saving.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive. The invention is defined by the appended claims.

**Claims**

1. A method of determining, with a Near-Field electronic reader (100) comprising at least two antennas (106, 108), a location of a selected electronic tag (102) amongst an array (104) of closely stacked tags (101), the method comprising:

generating at least two magnetic fields using the at least two antennas, the at least two magnetic fields causing intersecting lines of magnetic flux (114, 116) relative to the array of closely stacked tags, the intersecting lines of magnetic flux defining at least one detection zone (118);
sequentially switching each antenna (106, 108) to receive sequential antenna signals indicative of tags within each magnetic field, the antenna signals including detection zone readings;

**characterised in that** the method further comprises:

responsive to at least two successive sequential switching operations, obtaining a difference in two successive detection zone readings; and
generating an output signal indicative of the location of the selected electronic tag (102) relative to the at least one detection zone (118).

2. The method of claim 1, wherein the generating is based on the difference.

3. The method of claim 1 or 2 wherein the difference in the successive detection zone readings is caused by a relative movement between the selected electronic tag and the at least one detection zone.

4. The method of any one of the preceding claims, wherein:

each received antenna signal is indicative of a set of electronic tags read by that antenna;
the detection zone readings are determined from an overlap of two sets of readings; and
wherein the method comprises determining the difference from a change in the detection zone readings associated with receipt of antenna signals resulting from two successive switching operations.

5. The method of any one of the preceding claims wherein the generating comprises generating the at least two magnetic fields so that the magnetic fields are oriented to couple with the tags in the array of closely stacked tags.

6. The method of any one of the preceding claims wherein the output signal activates a direction annunciator that indicates a relative direction of the selected electronic tag in relation to the at least one detection zone.

7. The method of any one of the preceding claims wherein the method further comprises resizing the at least one detection zone by changing a strength of at least one of the at least two magnetic fields.

8. The method of any one of the preceding claims wherein the output signal is indicative of the location with respect to at least one of:

an area across a width of the electronic reader; and
an area along a length of the electronic reader.

9. A Near-Field electronic reader (100) for determining a location of a selected electronic tag (102) amongst an array (104) of closely stacked tags (101), the electronic reader comprising:

at least two independently operable antennas (106, 108) configured to be operated sequentially to interrogate electronic tags and output sequential antenna signals including detection zone readings, each antenna comprising at least one conducting portion (110, 112) which generates a magnetic field, the conducting portions being spaced from each other such that the generated magnetic fields cause lines of magnetic flux that intersect to define at least one detection zone (118); the reader being **characterised by**
a processor (120) responsive to at least two successive sequential switching operations of the at least two antennas (106, 108) to obtain a difference in two successive detection zone readings, wherein the processor (120) uses the difference to generate an output signal indicative of the location of the selected electronic tag (102) relative to the at least one detection zone (118).

10. The Near-Field electronic reader of claim 9, wherein the two detection zone readings differ due to a relative movement between the selected electronic tag and the at least one detection zone.

11. The Near-Field electronic reader of claim 9 or 10, wherein the magnetic field of each conducting portion causes a coupling with a tag antenna of the selected tag when the tag antenna is within a coupling distance to the respective conductive portion, said coupling having a coupling strength indicative of a distance between the tag antenna and the conducting portion.

12. The Near-Field electronic reader of any one of claims 9 to 11, wherein the magnetic fields are oriented to couple with tags in the array of closely stacked tags.

13. The Near-Field electronic reader of any one of claims 9 to 12, wherein tags in the array of closely stacked tags have a fixed relative position in relation to the selected electronic tag.

14. The Near-Field electronic reader of any one of claims 9 to 13 further comprising an annunciator responsive to the output signal and configured to indicate a relative direction of movement to locate the selected electronic tag in the detection zone.

15. The Near-Field electronic reader of any one of claims 9 to 14, wherein the at least two independently operable antennas comprise a two dimensional array of antennas that define a plurality of detection zones arranged across at least one of a width and a length of a surface of the electronic reader.

**Patentansprüche**

1. Verfahren zum Bestimmen, mit einem elektronischen Nahfeld-Lesegerät (100), welches wenigstens zwei Antennen (106, 108) umfasst, einer Position eines ausgewählten elektronischen Etiketts (102) unter einer Anordnung (104) eng gestapelter Etiketten (101), wobei das Verfahren umfasst:

Erzeugen wenigstens zweier magnetischer Felder unter Verwendung der wenigstens zwei Antennen, wobei die wenigstens zwei magnetischen Felder einander schneidende magnetische Flusslinien (114, 116) bezüglich der Anordnung eng gestapelter Etiketten verursachen, wobei die einander schneidenden magnetischen Flusslinien wenigstens eine Erfassungszone (118) definieren;
sequentielles Schalten jeder Antenne (106, 108), um sequentielle Antennensignale zu empfangen, die Etiketten innerhalb jedes magnetischen Feldes anzeigen, wobei die Antennensignale Erfassungszonenmesswerte (Original: detection zone readings) enthalten;

**dadurch gekennzeichnet, dass** das Verfahren weiterhin umfasst:

in Erwiderung auf wenigstens zwei aufeinanderfolgende sequentielle Schaltoperationen Erhalten einer Differenz zweier aufeinanderfolgender Erfassungszonenmesswerte; und
Erzeugen eines Ausgabesignals, welches die Position des ausgewählten elektronischen Etiketts (102) bezüglich der wenigstens einen Erfassungszone (118) anzeigt.

2. Verfahren nach Anspruch 1, wobei das Erzeugen auf der Differenz basiert.

3. Verfahren nach Anspruch 1 oder 2, wobei die Differenz zweier aufeinanderfolgender Erfassungszonenmesswerte durch eine relative Bewegung zwischen dem ausgewählten elektronischen Etikett und der wenigstens einen Erfassungszone verursacht wird.

4. Verfahren nach einem der vorhergehenden Ansprüche, wobei
das empfangene Antennensignal einen Satz elektronischer Etiketten, die durch die Antenne gelesen wurden, anzeigt;
die Erfassungszonenmesswerte aus einer Überlappung von zwei Sätzen von Ablesungen bestimmt werden; und wobei das Verfahren das Bestimmen der Differenz aus einer Änderung in den mit dem Empfang von aus zwei aufeinanderfolgenden Schaltoperationen resultierenden Antennensignalen assoziierten Erfassungszonenmessungen umfasst.

5. Verfahren nach einem der vorhergehenden Ansprüche, wobei das Erzeugen der wenigstens zwei magnetischen Felder umfasst, die magnetischen Felder so zu erzeugen, dass sie orientiert sind, um mit den Etiketten in der Anordnung eng gestapelter Etiketten zu koppeln.

6. Verfahren nach einem der vorhergehenden Ansprüche, wobei das Ausgabesignal einen Richtungsanzeiger aktiviert, der eine relative Richtung des ausgewählten elektronischen Etiketts bezüglich der wenigstens einen Erfassungszone anzeigt.

7. Verfahren nach einem der vorhergehenden Ansprüche, wobei das Verfahren weiterhin umfasst eine Größenveränderung der wenigstens einen Erfassungszone durch Verändern einer Stärke wenigstens eines der wenigstens zwei magnetischen Felder.

8. Verfahren nach einem der vorhergehenden Ansprüche, wobei das Ausgabesignal die Position bezüglich wenigstens einem von
einem Bereich über eine Breite des elektronischen Lesegeräts; und
einem Bereich entlang einer Länge des elektronischen Lesegeräts anzeigt.

9. Elektronisches Nahfeld-Lesegerät (100) zum Bestimmen einer Position eines ausgewählten elektronischen Etiketts (102) unter einer Anordnung (104) eng gestapelter Etiketten (101), wobei das elektronische Lesegerät umfasst:

wenigstens zwei unabhängig betreibbare Antennen (106, 108), eingerichtet, um sequentiell betrieben zu werden, um elektronische Etiketten abzufragen und sequentielle Antennensignale auszugeben, die Erfassungszonenmesswerte (Original: detection zone readings) enthalten, wobei jede Antenne wenigstens einen leitenden Teil (110, 112) enthält, der ein magnetisches Feld erzeugt, wobei die leitenden Teile voneinander beabstandet sind, so dass die erzeugten Magnetfelder magnetische Flusslinien verursachen, die einander schneiden, um wenigstens eine Erfassungszone (118) zu definieren, wobei das Lesegerät charakterisiert ist durch
einen Prozessor (120), zum Erhalten einer Differenz zweier aufeinanderfolgender Erfassungszonenmessungen in Erwiderung auf wenigstens zwei aufeinanderfolgende sequentielle Schaltoperationen der wenigstens zwei Antennen (106, 108), wobei der Prozessor (120) die Differenz verwendet, um ein Ausgabesignal zu erzeugen, welches die Position des ausgewählten elektronischen Etiketts (102) bezüglich der wenigstens einen Erfassungszone (118) anzeigt.

10. Elektronisches Nahfeld-Lesegerät nach Anspruch 9, wobei die beiden Erfassungszonenmesswerte aufgrund einer relative Bewegung zwischen dem ausgewählten elektronischen Etikett und der wenigstens einen Erfassungszone differieren.

11. Elektronisches Nahfeld-Lesegerät nach Anspruch 9 oder 10, wobei das magnetische Feld jedes leitenden Teils ein Koppeln mit einer Etikettenantenne des ausgewählten Etiketts verursacht, wenn die Etikettenantenne sich innerhalb eines Kopplungsabstands zu dem jeweiligen leitenden Teil befindet, wobei die Kopplung eine Koppelstärke hat, die einen Abstand zwischen der Etikettenantenne und dem leitenden Teil anzeigt.

**12.** Elektronisches Nahfeld-Lesegerät nach einem der Ansprüche 9 bis 11, wobei die Magnetfelder orientiert sind, um mit Etiketten in der Anordnung eng gestapelter Etiketten zu koppeln.

**13.** Elektronisches Nahfeld-Lesegerät nach einem der Ansprüche 9 bis 12, wobei Etiketten in der Anordnung eng gestapelter Etiketten eine feste relative Position bezüglich des ausgewählten elektronischen Etiketts haben.

**14.** Elektronisches Nahfeld-Lesegerät nach einem der Ansprüche 9 bis 13, weiterhin umfassend einen Anzeiger, der auf das Ausgabesignal reagiert und eingerichtet ist, um eine relative Bewegungsrichtung anzugeben, um das ausgewählte elektronische Etikett in der Erfassungszone zu lokalisieren.

**15.** Elektronisches Nahfeld-Lesegerät nach einem der Ansprüche 9 bis 14, wobei die wenigstens zwei unabhängig betreibbaren Antennen eine zweidimensionale Anordnung von Antennen umfassen, die eine Mehrzahl von Empfangszonen definieren, die über wenigstens einer Breite und einer Länge einer Oberfläche des elektronischen Lesegeräts angeordnet sind.

## Revendications

**1.** Procédé de détermination, à l'aide d'un lecteur électronique en Champ-Proche (100) comprenant au moins deux antennes (106, 108), d'un emplacement d'une étiquette électronique sélectionnée (102) parmi un réseau (104) d'étiquettes étroitement empilées (101), le procédé comprenant les étapes consistant à :

générer au moins deux champs magnétiques en utilisant les au moins deux antennes, les au moins deux champs magnétiques provoquant des lignes de flux magnétique se croisant (114, 116) par rapport au réseau d'étiquettes étroitement empilées, les lignes de flux magnétique se croisant définissant au moins une détection zone (118) ;
commuter séquentiellement chaque antenne (106, 108) pour recevoir des signaux d'antenne séquentiels indicatifs d'étiquettes dans chaque champ magnétique, les signaux d'antenne comprenant des lectures de zone de détection ;
**caractérisé en ce que** le procédé comprend en outre :

en réponse à au moins deux opérations de commutation séquentielles successives, l'obtention d'une différence dans deux lectures de zone de détection successives ; et
la génération d'un signal de sortie indicatif de l'emplacement de l'étiquette électronique sélectionnée (102) par rapport à la au moins une zone de détection (118).

**2.** Procédé selon la revendication 1, dans lequel la génération est basée sur la différence.

**3.** Procédé selon la revendication 1 ou 2, dans lequel la différence dans les lectures successives de zone de détection est provoquée par un mouvement relatif entre l'étiquette électronique sélectionnée et la au moins une zone de détection.

**4.** Procédé selon l'une quelconque des revendications précédentes, dans lequel :

chaque signal d'antenne reçu est indicatif d'un ensemble d'étiquettes électroniques lues par cette antenne ;
les lectures de zone de détection sont déterminées à partir d'un chevauchement de deux ensembles de lectures ; et
dans lequel le procédé comprend la détermination de la différence à partir d'un changement dans les lectures de zone de détection associées à la réception de signaux d'antenne résultant de deux opérations de commutation successives.

**5.** Procédé selon l'une quelconque des revendications précédentes, dans lequel la génération comprend la génération des au moins deux champs magnétiques de sorte que les champs magnétiques sont orientés pour se coupler aux étiquettes dans le réseau d'étiquettes étroitement empilées.

**6.** Procédé selon l'une quelconque des revendications précédentes, dans lequel le signal de sortie active un annonciateur de direction qui indique une direction relative de l'étiquette électronique sélectionnée par rapport à la au moins une zone de détection.

**7.** Procédé selon l'une quelconque des revendications précédentes, dans lequel le procédé comprend en outre le redimensionnement de la au moins une zone de détection en changeant une force d'au moins l'un des au moins deux champs magnétiques.

**8.** Procédé selon l'une quelconque des revendications précédentes, dans lequel le signal de sortie est indicatif de l'emplacement par rapport à au moins l'une parmi :

une zone à travers une largeur du lecteur électronique ; et
une zone le long d'une longueur du lecteur électronique.

**9.** Lecteur électronique en Champ-Proche (100) pour déterminer un emplacement d'une étiquette électronique sélectionnée (102) parmi un réseau (104) d'étiquettes étroitement empilées (101), le lecteur électronique comprenant :

au moins deux antennes à fonctionnement indépendant (106, 108) configurées pour être activées séquentiellement pour interroger des étiquettes électroniques et délivrer en sortie des signaux d'antenne séquentiels comprenant des lectures de zone de détection, chaque antenne comprenant au moins une partie conductrice (110, 112) qui génère un champ magnétique, les parties conductrices étant espacées les unes des autres de telle sorte que les champs magnétiques générés provoquent des lignes de flux magnétique qui se croisent pour définir au moins une zone de détection (118) ;
le lecteur étant **caractérisé par** un processeur (120) sensible à au moins deux opérations de commutation séquentielles successives des au moins deux antennes (106, 108) pour obtenir une différence dans deux lectures de zone de détection successives, dans lequel le processeur (120) utilise la différence pour générer un signal de sortie indicatif de l'emplacement de l'étiquette électronique sélectionnée (102) par rapport à la au moins une zone de détection (118).

**10.** Lecteur électronique en Champ-Proche selon la revendication 9, dans lequel les deux lectures de zone de détection diffèrent du fait d'un mouvement relatif entre l'étiquette électronique sélectionnée et la au moins une zone de détection.

**11.** Lecteur électronique en Champ-Proche selon la revendication 9 ou 10, dans lequel le champ magnétique de chaque partie conductrice provoque un couplage avec une antenne d'étiquette de l'étiquette sélectionnée lorsque l'antenne d'étiquette est à une distance de couplage avec la partie conductrice respective, ledit couplage ayant une force de couplage indicative d'une distance entre l'antenne d'étiquette et la partie conductrice.

**12.** Lecteur électronique en Champ-Proche selon l'une quelconque des revendications 9 à 11, dans lequel les champs magnétiques sont orientés pour se coupler à des étiquettes dans le réseau d'étiquettes étroitement empilées.

**13.** Lecteur électronique en Champ-Proche selon l'une quelconque des revendications 9 à 12, dans lequel des étiquettes dans le réseau d'étiquettes étroitement empilées ont une position relative fixe par rapport à l'étiquette électronique sélectionnée.

**14.** Lecteur électronique en Champ-Proche selon l'une quelconque des revendications 9 à 13 comprenant en outre un annonciateur sensible au signal de sortie et configuré pour indiquer une direction relative de mouvement pour localiser l'étiquette électronique sélectionnée dans la zone de détection.

**15.** Lecteur électronique en Champ-Proche selon l'une quelconque des revendications 9 à 14, dans lequel les au moins deux antennes à fonctionnement indépendant comprennent un réseau bidimensionnel d'antennes qui définissent une pluralité de zones de détection disposées à travers au moins l'une d'une largeur et d'une longueur d'une surface du lecteur électronique.

**Figure 1A**

**Figure 1B**

**Figure 2A**

**Figure 2B**

**Figure 3A**

**Figure 3B**

Figure 4A

Figure 4B

502

520

506

510

1
2
1
2

1
2
1
2

526
528
530

522

524

0.5H

∅

∅

∅min  0.5H

∅

∅

520

∅min

Figure 5A

500

520

504

508

532   Figure 5B   534   532

536

600

Generate Detection Zone

602

Switch antennas

604

Difference in detection zone
readings

606

Location output

608

**Figure 6**

**Figure 7**

**Figure 8A**

**Figure 8B**

**Figure 8C**

**Figure 8D**

**Figure 9**

**EP 3 510 520 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007030861 A
- US 2014291399 A
- US 2016078263 A
- US 2006165039 A